# EUROPÄISCHE PATENTANMELDUNG

(11) **EP 2 354 603 A1**
(43) Veröffentlichungstag der Anmeldung: **10.08.2011**
(21) Anmeldenummer: 10001292.1
(22) Anmeldetag: 09.02.2010
(51) Int. Cl.: F16J 15/00, F16J 15/32, F16L 27/087

(54) **Abdichtung zwischen einem feststehenden Maschinenteil und einem um dieses drehenden zweiten Maschinenteil**

(71) Anmelder: Carl Freudenberg KG, 69469 Weinheim (DE)
(72) Erfinder: Dahlhaus-Preussler, Ulrich, 68535 Edingen (DE); Barban, Massimo, 10060 Fenile (IT)

(57) **Zusammenfassung**

Abdichtung zwischen einem feststehenden ersten Maschinenteil und einem um dieses drehenden zweiten Maschinenteil, wobei der erste feststehende Maschinenteil als Achsstummel (2) ausgebildet ist und der um den Achsstummel (2) drehende zweite Maschinenteil ein Behälter (3) ist, wobei der Achsstummel (2) mit mindestens einer axialen Zuflussbohrung (6) ausgestattet ist, die mindestens an eine im Achsstummel (2) angebrachte, nach außen weisende Öffnung (7) anschließt und der Behälter (3) eine den Achsstummel (2) umgreifende Nabe (5) mit einer gleichen Anzahl von Öffnungen (8) hat, die mit den Öffnungen (7) des Achsstummels (2) paarweiseartig korrespondieren, wobei die einzelnen korrespondierenden Öffnungen (7, 8) jeweils durch zwei Radialdichtungen (9) von benachbarten Öffnungen (7', 8') getrennt sind.

## Beschreibung

### Technisches Gebiet

In der Technik besteht häufig die Notwendigkeit, den Innenraum eines Gehäuses mit einer in die Gehäusewandung eingesetzten Welle gegenüber der Außenseite abzudichten. Hierfür werden in den Ringspaft zwischen der Gehäusewandung und der Welle Radialwellendichtungen eingesetzt. Die Dichtung verhindert das Austreten von Schmiermittel aus dem Innenraum des Gehäuses und schützt diesen Innenraum auch gleichzeitig vor Eindringen von Schmutzpartikeln von außen. Daneben besteht auch das Problem einer Abdichtung von Fluiden, die keinen Schrniermittelanteil enthalten, z.B. von Wasser.

### Darstellung der Erfindung

Die Erfindung befasst sich mit einem Sonderproblem einer Abdichtung von zwei Maschinenteileri, bei dem beide Maschinenteile Innenräume aufweisen, welche fluidmäßig miteinander kommunizieren. Die Aufgabe der vorliegenden Erfindung ist, diese Fluidverbindung herzustellen, die Beweglichkeit der Maschinenteile zueinander zu erhalten und eine Abdichtung zur Umgebung sicher zustellen.

Die Lösung der gestellten Aufgabe wird mit den Merkmalen des Anspruchs 1 erreicht. Die Unteransprüche 2 bis 12 stellen vorteilhafte Weiterbildungen des Erfindungsgedankens dar.

Um eine gute abgedichtete Fluidverbindung zwischen einem ersten feststehenden Maschinenteil und dem zweiten sich um den ersten drehenden Maschinenteil zu erreichen, wird der erste feststehende Maschinenteil als Achsstummel ausgebildet und der um diesen Achsstummel drehende zweite Maschinenteil als Behälter. Dabei wird der Innenraum des Achsstummels über mindestens eine nach außen weisende Öffnung mit in der den Achsstummel umgreifenden Behälterwandung angebrachten Öffnung mit dem Behälterraum fluidmäßig verbunden. Dabei werden zwischen den einzelnen Strömungswegen des Fluids Radialdichtungen angeordnet. Die Befüllung des Innenraums des Behälters erfolgt folglich über den Innenraum des Achsstummels und die im Achsstummel und der Behälterwand vorhandenen Öffnungen. Bevorzugt wird der Behälter mit einer den Achsstummel umgreifenden Nabe versehen. Das Fluid wird dann in den Ringraum zwischen dem Achsstummel und der Nabe geleitet, welcher durch die Radialdichtungen abgedichtet ist.

Die im Achsstummel vorhandenen Öffnungen sind radial ausgerichtet und münden in die Zwischenräume zwischen den Radialdichtungen. Die Öffnungen werden durch Bohrungen hergestellt, die auf dem Umfang des Achsstummels verteilt in mehreren Reihen angeordnet werden können. Die Behälterwand bzw. Nabe wird ebenfalls mit Öffnungen versehen, welche in ihrer Anzahl der Anzahl der Öffnungen im Achsstummel entsprechen und die vorzugsweise radial gleichgerichtet zu den Öffnungen im Achsstummel verlaufen. Die zueinander ausgerichteten Öffnungen werden seitlich von Radialdichtungen eingefasst, so dass zwischen den Öffnungen im Achsstummel und in der Behälterwandung bzw. Nabe ein von den Radialdichtungen eingefasster Zwischenraum entsteht. Die Radialdichtungen haben bevorzugt eine statische, aus einem Elastomer bestehende und an der Behälterwandung fest anliegende Dichtung und eine dynamische, aus einem PTFE-Compound bestehende, am Achsstummel gleitend anliegende Dichtung. Eine solche Dichtung hat den Vorteil, dass die dynamische Dichtung kein Schmiermittel benötigt, sondem auch bei Fluiden im sogenannten Trockenlauf verwendet werden kann. Für den Fall, dass das Fluid jedoch auch Schmiermittelbestandteile aufweist, kann die dynamische Dichtung auch aus einem Elastomer bestehen.

Die Radialdichtungen werden mit metallischen Stützkörper ausgestattet, die L-förmig ausgebildet sind und aus einem ringförmigen, die statische Dichtung tragenden Element und einem integralanschließenden, scheibenförmigen, die dynamische Dichtung tragenden Flansch bestehen. In bevorzugter Ausführungsform werden die Radialdichtungen mit axial vorstehenden, die statische Dichtung am ringförmigen Element untergreifenden und formschlüssig oder mit Presssitz daran einfügbaren Ringsegmenten ausgestattet. Die so ausgebildetten Radialdichtungen werden in beliebiger Anzahl zu einem Modul miteinander verbunden, wodurch der Montagevorgang erheblich vereinfacht wird.

Günstig ist es auch, wenn der scheibenförmige Flansch des Stützkörpers von dem Elastomer der statischen Dichtung mit ummantelt wird. Hierdurch werden die Stützkörper vor Erosion geschützt. Außerdem ist bei Einsatz von PTFE-Dichtungen ein Verkleben der dynamischen PTFE-Dichtung am Elastomer der statischen Dichtung begünstigt. Um auch bei der Verwendung von Ringsegmenten einen guten Durchtritt des Fluids in den Behälter zu ermöglichen, wird für den Fall, dass die statische Dichtung vom Ringsegment auf seiner radial inneren Fläche überdeckt wird, die Überdeckung mit auf ihrem Umfang in gleichmäßigen Abständen vorgesehenen Strömungskanälen versehen, welche in auf der Außenfläche der Dichtung angebrachte und die Dichtung umrundende Rundkanäle münden. Diese Rundkanäle werden durch Ausnehmungen auf den aneinander angrenzenden Teilen der Außenflächen der statischen Dichtung gebildet.

### Kurzbeschreibung der Zeichnung

Anhand der in der Zeichnung dargestellten Ausführungsbeispiele wird die Erfindung nachstehend näher erläutert.

Es zeigt
- Figur 1: die Abdichtung im Längsschnitt in schematischer Darstellung,
- Figur 2: eine einzelne Radialdichtung im Schnitt,
- Figur 3: einen Abschnitt aus dem oberen Teil der Figur 1 in vergrößerter Darstellung und
- Figur 4: einen Längsschnitt durch die Abdichtung mit angedeuteter Lagerung der Welle für den Antrieb des Behälters

### Ausführung der Erfindung

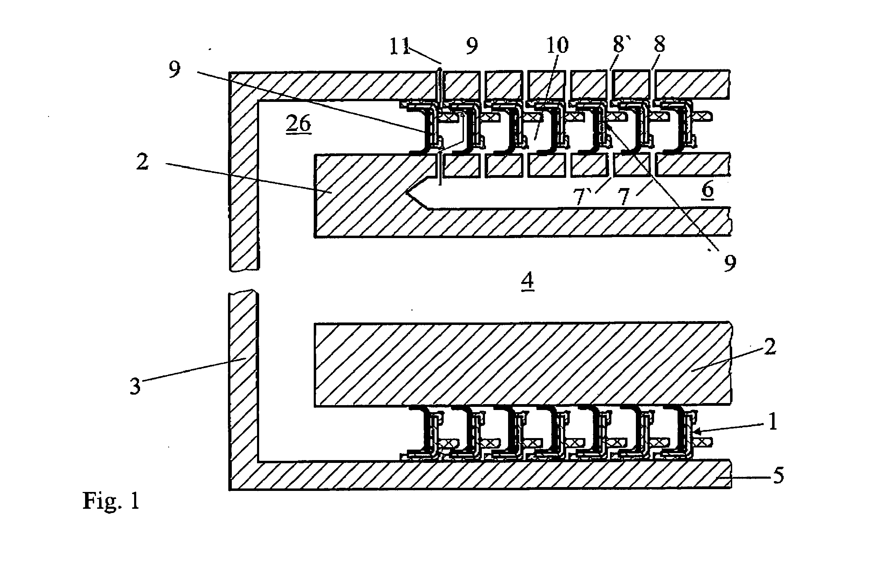

In der Figur 1 ist ein Längsschnitt durch ein Abdichtungsmodul 1 gezeigt, welches zwischen der feststehenden Nabe 2 und dem die Nabe 2 umgebenden Behälter 3 angeordnet ist.

Bei dem in der Figur 1 gezeigten Achsstummel 2 hat derselbe einen zentralen Durchlass 4, in dem beispielsweise eine Antriebswelle für den Behälter 3 untergebracht werden kann. Der Behälter 3 ist mit einer den Achsstummel 2 umgreifenden Nabe 5 versehen, der Achsstummel 2 hat die axiale Zuflussbohrung 6, welche die nach außen weisenden Öffnungen 7 hat. Insgesamt sind im vorliegenden Fall in der Nabe 5 des Behälters 3 die gleiche Anzahl von Öffnungen 8 vorgesehen. Im vorliegenden Beispiel sind jeweils 6 Öffnungen im Achsstummel 2 und in der Nabe 5 angebracht. Die Anzahl der Öffnungen 7 richtet sich nach den gewollten Durchflussmengen für das betreffende Fluid. Jeweils eine Öffnung 7 im Achsstummel 2 korrespondiert mit einer Öffnung 8 in der Nabe 5. Die betreffenden Öffnungen 7 und 8 liegen paarweiseartig radial in etwa der gleichen Richtung. Durch die Radialdichtungen 9 werden die jeweils zugehörigen Öffungen 7, 8 und 7', 8' voneinander getrennt. Der Strömungsverlauf von der Zuflussbohrung 6 über eine Öffnung 7, den Zwischenraum 10, zwischen zwei Dichtungen 9 und einer Öffnung 8 ist mit der Linie 11 bei den linksliegenden, äußeren Bohrungen 7 und 8 angezeigt. Die Zuflussbohrung 6 ist in die Wandung 12 des Achsstummels 2 eingebracht. Im Beispiel ist in der Wandung 12 nur eine Zuflussbohrung 6 eingezeichnet. Ohne den Gedanken der Erfindung zu verlassen, können in die Wandung 12 mehrere Zuflussbohrungen 6 mit den entsprechenden Öffnungen 7 angebracht werden. Gleiches gilt auch für die Öffnungen 8 in der Nabe 5.

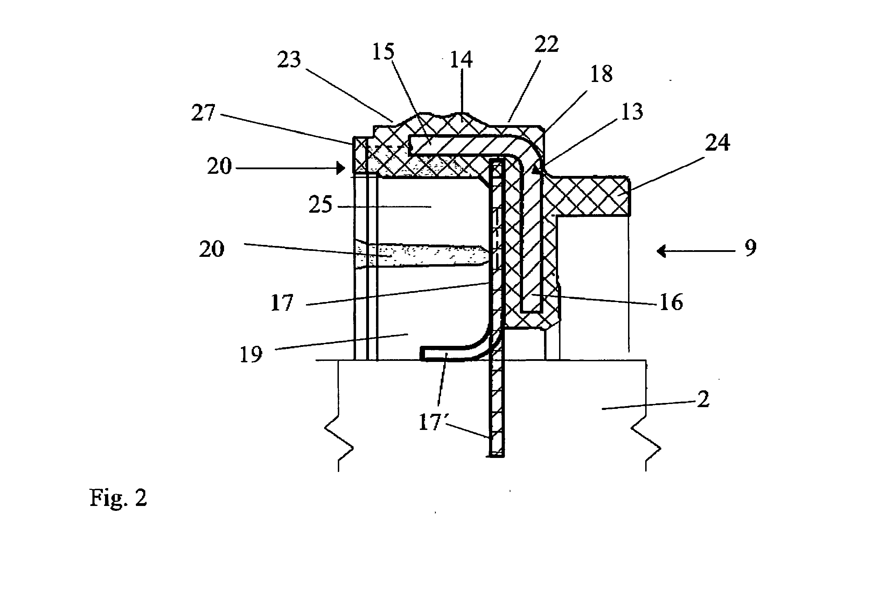

In der Figur 2 ist vergrößert die Ausgestaltung der Radialdichtungen 9 gezeigt. Die Radialdichtung 9 besteht aus dem metallischen Stützkörper 13, der L-förmig ausgebildet ist und einen ringförmigen, die statische Dichtung 14 tragenden Element 15 und einem scheibenförmigen Flansch 16 hat. Der Stützkörper 13 ist von dem Material der statischen Dichtung 14 vollständig umhüllt. Auf der Innenseite der Dichtung 9 ist die dynamische Dichtung 17 angebracht. Die dynamische Dichtung 17 besteht aus einem PTFE-Compound und ist scheibenförmig ausgebildet. Die Dichtung 17 ist an den Teil der statischen Dichtung 14, welcher am Flansch 16 vorhanden ist, angeklebt. Gleichzeitig ist die Dichtung 17 mit ihrem radial außenliegenden Ende in eine Sicke 18 der statischen Dichtung 14 eingefügt. Hierdurch erhält die Dichtung 17 eine feste Verbindung in der Radialdichtung 9. Nach der Herstellung der Radialdichtung 9 steht die Dichtlippe 17' radial nach innen vor. Nachdem die Radialdichtung 9 in den Dichtspalt 26 eingesetzt ist, wird die Dichtlippe 17' umgebogen und liegt flach am Achsstummel 2 an. Das Material der statischen Dichtung 14 überdeckt das Ringsegment 15 des Stützkörpers 13 auf seiner radial inneren Fläche. Diese Überdeckung 19 hat auf ihrem Umfang in gleichmäßigen Abständen verteilt Strömungskanäle 20, die in auf der Außenfläche der statischen Dichtung 14 angebrachte und die Radialdichtung umrundende Rundkanäle 21 münden. Diese Rundkanäle 21 werden durch Ausnehmungen 22 und 23 an den aneinander angrenzenden Teilen der Außenflächen der statischen Dichtung 14 gebildet. An der Radialdichtung 9 sind axial vorstehende Ringsegmente 24 angebracht, welche in den Innenraum 25 einer benachbarten Radialdichtung 9 mit Presssitz eingefügt werden. Der Außendurchmesser des Ringsegments 24 und der Innendurchmesser der Überdeckung 19 sind so aufeinander abgestimmt, dass eine Verbindung der einzelnen Radialdichtungen 9 untereinander durch Presssitz möglich ist. Auf diese Weise werden mehrere einzelne Radialdichtungen 9 zu einem Modul 1 zusammengefasst, welches wie in Figur 1 gezeigt, in den Spalt 26 zwischen Achsstummel 2 und Nabe 5 eingesetzt wird. Ein solches Modul 1 erleichtert die Montage der einzelnen Teile 9 erheblich. Dabei sind die Abstände zwischen den einzelnen Radialdichtungen 9 auf die Öffnungen 7 und 8 im Achsstummel 2 beziehungsweise der Nabe 12 aufeinander abgestimmt. Unterstützt wird dieses durch die Puffer 27 der einzelnen Radialdichtungen 9, welche beim Zusammenfügen der Radialdichtungen 9 an der jeweils nächstliegenden Dichtung 9 zur Anlage kommen. Diese Puffer lassen gleichzeitig eine Öffnung für die Fluidströmung frei.

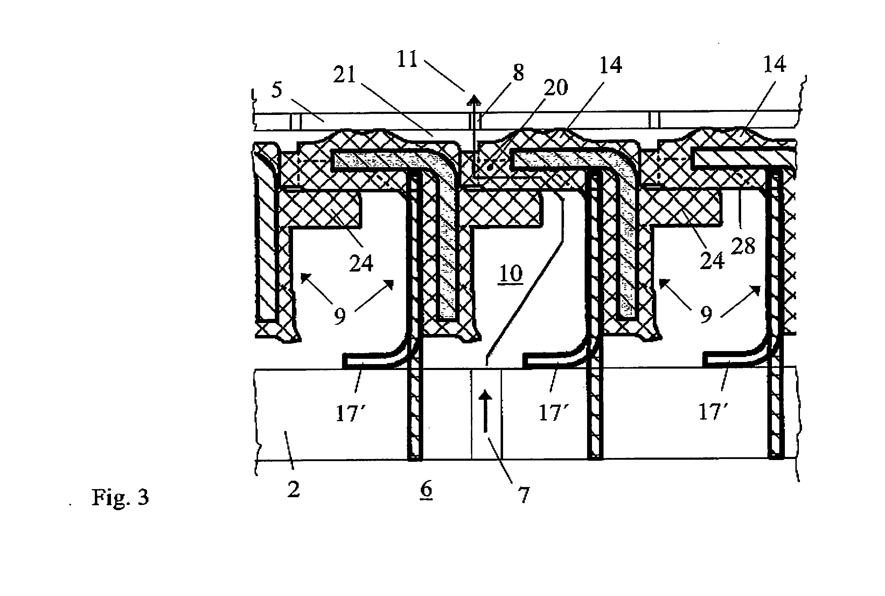

In der Figur 3 ist vergrößert der Zusammenbau mehrerer Radialdichtungen 9 dargestellt. Die statischen Dichtungen 14 sind in die Nabe 5 eingepresst und halten die Radialdichtungen 9 in ihrer Lage. Dabei sind die Radialdichtungen 9 zu einem Modul 1 zusammengefasst. Die Dichtlippen 17' liegen an der Wand des Achsstummels 2 an. Aus der Zuflussbohrung 6 fließt das Fluid wie mit der durchgezogenen Linie und den Pfeilen 11 angezeigt durch die Öffnung 7 im Achsstummel 2, den Zwischenraum 10, den Strömungskanal 20 und die Öffnung 8 in der Nabe 5 in den nicht näher gezeigten Behälters 3. Die einzelnen Radialdichtungen 9 sind mit Presssitz über die Ringsegmente 24 und die Unterseite 28 der statischen Dichtung 14 miteinander zu einem Modul 1 verbunden.

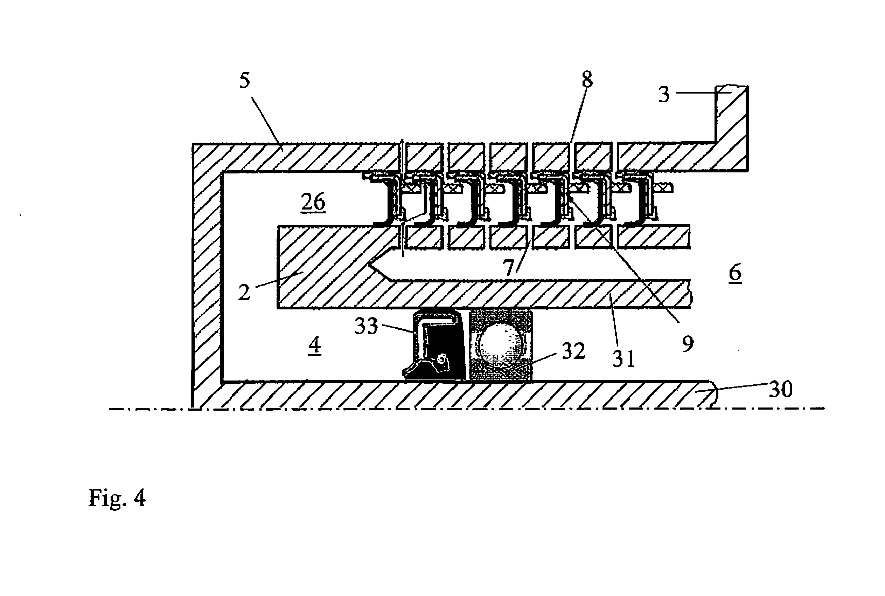

In der Figur 4 ist schematisch eine Ausführungsform gezeigt, bei der der Behälter 3 mit der Antriebswelle 30 verbunden ist. Zwischen der Antriebswelle 30 und der Innenwand 31 des Achsstummels 2 kann ein Kugellager 32 mit einer entsprechenden Radialdichtung 33 eingesetzt sein, wobei die Radialdichtung 33 in diesem Fall eine statische und auch eine dynamische Dichtung aus einem elastomeren Material hat.

## Patentansprüche

1. Abdichtung zwischen einem feststehenden ersten Maschinenteil und einem um dieses drehenden zweiten Maschinenteil, **dadurch gekennzeichnet, dass** der erste feststehende Maschinenteil als Achsstummel (2) ausgebildet ist und der um den Achsstummel (2) drehende zweite Maschinenteil ein Behälter (3) ist, wobei der Achsstummel (2) mit mindestens einer axialen Zuflussbohrung (6) ausgestattet ist, die mindestens an eine im Achsstummel (2) angebrachte, radial nach außen weisende Öffnung (7) anschließt und der Behälters (3) eine den Achsstummel (2) umgreifende Nabe (5) mit einer gleichen Anzahl von Öffnungen (8) hat, die mit den Öffnungen (7) des Achsstummels (2) paarweiseartig korrespondieren, wobei die einzelnen korrespondierenden Öffnungen (7, 8) jeweils durch zwei Radialdichtungen (9) von benachbarten Öffnungen (7', 8') getrennt sind.

2. Abdichtung nach Anspruch 1, **dadurch gekennzeichnet, dass** die Zuflussbohrung (6) eine Sackbohrung ist.

3. Abdichtung nach Anspruch 1 oder 2, **dadurch gekennzeichnet, dass** die am Achsstummel (2) vorhandenen Öffnungen (7) radial ausgerichtet sind und in Zwischenräume (10) zwischen den Radialdichtungen (9) münden.

4. Abdichtung nach einem der Ansprüche 1 bis 3, **dadurch gekennzeichnet, dass** jede Radialdichtung (9) eine statische, aus einem Elastomer bestehende, an der Behältemabe (5) fest anliegende und eine dynamische, aus einem PTFE-Compound bestehende, am Achsstummel (2) gleitend anliegende Dichtung (17) hat.

5. Abdichtung nach einem der Ansprüche 1 bis 4, **dadurch gekennzeichnet, dass** die Radialdichtungen (9) metallische Stützkörper (13) haben, die L-förmig ausgebildet sind und aus einem ringförmigen, die statische Dichtung (14) tragenden Element (15) und einem integral anschließenden, scheibenförmigen, die dynamische Dichtung tragenden Flansch (16) bestehen.

6. Abdichtung nach einem der Ansprüche 1 bis 5, **dadurch gekennzeichnet, dass** die Radialdichtungen (9) axial vorstehende, die statische Dichtung (14) am ringförmigen Element (15) der benachbarten Radialdichtung (9) untergreifende und formschlüssig oder mit Presssitz daran einfügbare Ringsegmente (24) haben

7. Abdichtung nach einem der Ansprüche 1 bis 6, **dadurch gekennzeichnet, dass** der scheibenförmige Flansch (16) des Stützkörpers (13) von dem Elastomer der statischen Dichtung (14) mitummantelt ist.

8. Abdichtung nach einem der Ansprüche 1 bis 7, **dadurch gekennzeichnet, dass** die dynamische Dichtung (9) an das Elastomer der statischen Dichtung (14) angeklebt ist.

9. Abdichtung nach einem der Ansprüche 1 bis 8, **dadurch gekennzeichnet, dass** die statische Dichtung (14) das Element (15) auf seiner radial inneren Fläche überdeckt, wobei die Überdeckung (19) mit auf ihrem Umfang in gleichmäßigen Abständen vorgesehenen Strömungskanälen (20) ver sehen ist, die in auf der Außenfläche der Dichtung (14) angebrachte, die Radialdichtung (9) umrundende Rundkanäle (21) münden.

10. Abdichtung nach einem der Ansprüche 1 bis 9, **dadurch gekennzeichnet, dass** die Rundkanäle (21) durch Ausnehmungen (22, 23) auf aneinander angrenzenden Teilen der Außenflächen gebildet sind.

11. Abdichtung nach einem der Ansprüche 1 bis 10, **dadurch gekennzeichnet, dass** der Achsstummel (2) einen zentralen Durchlass (4) hat.

12. Abdichtung nach Anspruch 11, **dadurch gekennzeichnet, dass** die Zuflussbohrung (6) bzw. Zuflussbohrungen (6) in die Wandung (12) des Achsstummels (2) eingebracht sind.
